# EUROPÄISCHE PATENTSCHRIFT

(11) **EP 3 521 100 B1**
(45) Veröffentlichungstag und Bekanntmachung des Hinweises auf die Patenterteilung: **23.12.2020**
(21) Anmeldenummer: 18020551.0
(22) Anmeldetag: 24.10.2018
(51) Int. Cl.: B60L 53/18, B60L 53/302, H01B 7/42, H01R 4/20, H01R 9/11

(54) **KRAFTFAHRZEUGLADEKABEL**
MOTOR VEHICLE CHARGING CABLE
CÂBLE DE CHARGE DE VOITURE AUTOMOBILE

(30) Priorität: 01.02.2018 DE 102018102207
(43) Veröffentlichungstag der Anmeldung: 07.08.2019
(73) Patentinhaber: Dr.Ing. h.c. F. Porsche Aktiengesellschaft, 70435 Stuttgart (DE)
(72) Erfinder: HEYNE, Raoul, 75446 Wiernsheim (DE); RÖNFANZ, Jari, 75417 Mühlacker (DE)

(56) Entgegenhaltungen:
- CN-U- 206 697 276
- CN-Y- 201 229 802
- DE-A1-102015 120 048
- DE-A1-102016 112 306

## Beschreibung

Die Erfindung betrifft ein Kraftfahrzeugladekabel.

Aus der DE 10 2015 120 048 A1 ist ein Kraftfahrzeugladekabel für ein Gleichspannungsladen eines elektrischen Energiespeichers eines Kraftfahrzeugs bekannt. So ist aus diesem Stand der Technik ein Kraftfahrzeugladekabel mit einem ersten elektrischen Leiter für eine erste Gleichspannungsphase und einem zweiten elektrischen Leiter für eine zweite Gleichspannungsphase bekannt, wobei die beiden elektrischen Leiter von einem Kabelmantel umgeben sind. Jeder der beiden elektrischen Leiter verfügt über jeweils eine Isolationsschicht, wobei in der Isolationsschicht des jeweiligen elektrischen Leiters Leiteradern des jeweiligen elektrischen Leiters verlaufen. Zwischen der jeweiligen Isolationsschicht und den jeweiligen Leiteradern des jeweiligen elektrischen Leiters ist ein Kühlmittelkanal ausgebildet, in dem ein Kühlfluid zum Kühlen des jeweiligen elektrischen Leiters führbar ist. Die jeweiligen Leiteradern des jeweiligen elektrischen Leiters sind dabei vom Kühlmittel umströmt und demnach von außen gekühlt.

Aus der DE 10 2016 112 306 A1 ist ein Kraftfahrzeugladekabel nach dem Oberbegriff des Patentanspruch 1 bekannt.

CN 206 697 276 U und CN 201 229 802 Y offenbaren weiteren Stand der Technik.

Aufgabe der Erfindung ist es, ein Kraftfahrzeugladekabel mit verbesserter Kühlung zu schaffen.

Diese Aufgabe wird durch ein Kraftfahrzeugladekabel gemäß Patentanspruch 1 gelöst.

Der erste und zweite elektrische Leiter weisen jeweils einen ersten Kühlmittelkanal zur Kühlung des jeweiligen Leiteraderstrangs von innen auf, der von den jeweiligen Leiteradern umschlossen ist.

Ferner weisen der erste und zweite elektrische Leiter erfindungsgemäß jeweils einen zweiten Kühlmittelkanal zur Kühlung des jeweiligen Leiteraderstrangs von außen auf, der die jeweiligen Leiteradern umschließt.

Jeder elektrische Leiter bzw. Leiteraderstrang aus Leiteradern wird jeweils von innen und jeweils von außen gekühlt. Der jeweilige erste Kühlmittelkanal dient der Kühlung des jeweiligen elektrischen Leiters bzw. Leiteraderstrangs aus Leiteradern von innen. Der jeweilige zweite Kühlmittelkanal dient der Kühlung des jeweiligen elektrischen Leiters bzw. Leiteraderstrangs aus Leiteradern von außen. Hiermit ist eine verbesserte, effektivere Kühlung der elektrischen Leiter des Kraftfahrzeugladekabels möglich.

Im Bereich des kraftfahrzeugseitigen Endes des Kraftfahrzeugladekabels ist der Crimpkontakt mit einem Steckkontakt elektrisch leitend verbunden, wobei zwischen dem Crimpkontakt und dem Steckkontakt eine stufenartige Durchmessererweiterung ausgebildet ist. Der Crimpkontakt des jeweiligen elektrischen Leiters weist benachbart zu einem Steckkontakt des jeweiligen elektrischen Leiters Ausnehmungen für den Übertritt des Kühlmittels vom jeweiligen ersten Kühlmittelkanal in den jeweiligen zweiten Kühlmittelkanal auf, wobei die Ausnehmungen unmittelbar benachbart zur Durchmesservergrößerung zwischen Crimpkontakt und Steckkontakt ausgebildet sind, sodass der Steckkontakt über das Kühlmittel, welches durch die Ausnehmungen strömt, von hinten kühlbar ist. Hierdurch ist es möglich, im Bereich des kraftfahrzeugseitigen Endes des Kraftfahrzeugladekabels das Kühlmittel effektiv vom ersten Kühlmittelkanal in den zweiten Kühlmittelkanal zu überführen und hierbei auch den Steckkontakt des jeweiligen elektrischen Leiters von hinten zu kühlen.

Nach einer vorteilhaften Weiterbildung ist der erste Kühlmittelkanal des jeweiligen elektrischen Leiters in einer ersten Richtung und der zweite Kühlmittelkanal des jeweiligen elektrischen Leiters in einer entgegengesetzten zweiten Richtung vom Kühlmittel durchströmbar, wobei der erste und der zweite Kühlmittelkanal des jeweiligen elektrischen Leiters einen leiterindividuellen Kühlkreislauf des jeweiligen elektrischen Leiters definieren. Der jeweilige erste Kühlmittelkanal und der jeweilige zweite Kühlmittelkanal bilden für den jeweiligen elektrischen Leiter einen leiterindividuellen Kühlkreislauf. Über den jeweiligen leiterindividuellen Kühlkreislauf wird der Leiteraderstrang aus Leiteradern des jeweiligen elektrischen Leiters sowohl von innen als auch von außen gekühlt, und zwar über den jeweiligen ersten Kühlmittelkanal von innen und über den jeweiligen zweiten Kühlmittelkanal von außen. Hiermit ist eine besonders effektive Kühlung der elektrischen Leiter eines Kraftfahrzeugladekabels möglich.

Vorzugsweise definiert der erste Kühlmittelkanal des jeweiligen elektrischen Leiters einen Kühlmittelvorlauf und der zweite Kühlmittelkanal einen Kühlmittelrücklauf des jeweiligen leiterindividuellen Kühlkreislaufs. Dann, wenn der jeweilige erste Kühlmittelkanal des jeweiligen elektrischen Leiters den Kühlmittelvorlauf und der jeweilige zweite Kühlmittelkanal des jeweiligen elektrischen Leiters den Kühlmittelrücklauf des jeweiligen leiterindividuellen Kühlkreislaufs definiert, kann Wärme über das Kraftfahrzeugladekabel besonders effektiv abgeführt werden.

Nach einer vorteilhaften Weiterbildung sind zwischen den Leiteradern des jeweiligen elektrischen Leiters und der Isolationsschicht des jeweiligen elektrischen Leiters röhrenartige Abstandhalter positioniert, die den jeweiligen zweiten Kühlmittelkanal unterteilen. Die Abstandhalter dienen der besonders effektiven Durchströmung des jeweiligen zweiten Kühlmittelkanals des jeweiligen elektrischen Leiters.

Nach einer vorteilhaften Weiterbildung sind im Bereich eines eines ladesäulenseitigen Endes des Kraftfahrzeugladekabels die Leiteradern des jeweiligen elektrischen Leiters jeweils auf einen den jeweiligen ersten Kühlmittelkanal abschnittsweise definieren Crimpkontakt über eine Crimphülse aufgecrimpt. Hierdurch ist eine effektive elektrische Kontaktierung der Leiteradern des jeweiligen elektrischen Leiters im Bereich der beiden Enden des Kraftfahrzeugladekabels möglich, wobei der Crimpkontakt den jeweiligen ersten Kühlmittelkanal abschnittsweise definiert und so die Führung des Kühlmittels im Bereich der beiden Enden des Kraftfahrzeugladekabels übernimmt.

Vorzugsweise ist im Bereich des ladesäulenseitigen Endes des Kraftfahrzeugladekabels dem ersten Kühlmittelkanal des jeweiligen elektrischen Leiters Kühlmittel über den Crimpkontakt ausgehend von einer Ladesäule zuführbar und aus dem zweitem Kühlmittelkanal des jeweiligen, elektrischen ist Kühlmittel in die Ladesäule abführbar. Diese Details dienen der effektiven Führung des Kühlmittels im Bereich des ladesäulenseitigen Endes des Kraftfahrzeugladekabels, und zwar einerseits der Zuführung des Kühlmittels in den jeweiligen ersten Kühlmittelkanal und andererseits der Abführung des Kühlmittels aus dem jeweiligen zweiten Kühlmittelkanal des jeweiligen elektrischen Leiters.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen stark schematisierten Querschnitt durch ein Kraftfahrzeugladekabel;
- Fig. 2: einen gegenüber Fig.1 um 90° gedrehten Querschnitt durch einen Leiter des Kraftfahrzeugladekabels im Bereich eines kraftfahrzeugseitigen Endes des Kraftfahrzeugladekabels;
- Fig. 3: einen gegenüber Fig.1 um 90° gedrehten Querschnitt durch einen Leiter des Kraftfahrzeugladekabels im Bereich eines ladesäulenseitigen Endes des Kraftfahrzeugladekabels.

Die Erfindung betrifft ein Kraftfahrzeugladekabel für ein Gleichspannungsladen eines elektrischen Energiespeichers eines Kraftfahrzeugs.

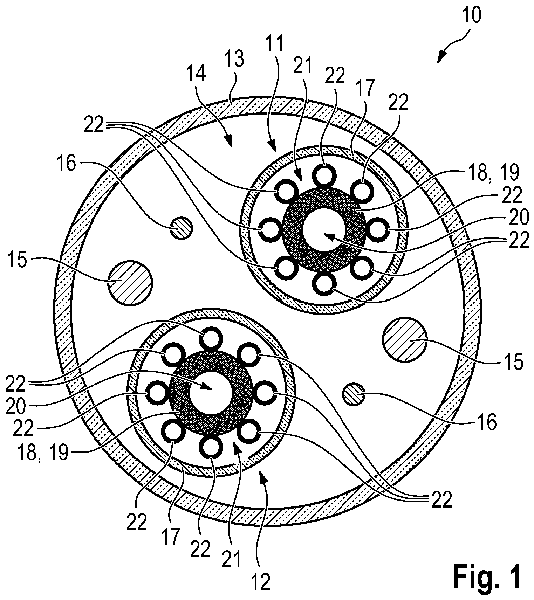

Fig. 1 zeigt einen stark schematisierten Querschnitt durch ein Kraftfahrzeugladekabel 10. Das Kraftfahrzeugladekabel 10 verfügt über einen ersten elektrischen Leiter 11 für eine erste Gleichspannungsphase sowie über einen zweiten elektrischen Leiter 12 für eine zweite Gleichspannungsphase. Die beiden elektrischen Leiter 11, 12 sind von einem Kabelmantel 13 umgeben. Innerhalb eines vom Kabelmantel 13 definierten Hohlraums 14 sind im in Fig. 1 gezeigten Ausführungsbeispiel nicht nur die beiden elektrischen Leiter 11, 12 für die beiden Gleichspannungsphasen positioniert, vielmehr verlaufen innerhalb dieses Hohlraums 14 im in Fig. 1 gezeigten Ausführungsbeispiel optional auch Zugentlastungselemente 15 sowie mindestens ein Datenleiter 16. Optional kann im Hohlraum 14 zumindest teilweise auch noch Füllmaterial angeordnet sein.

Jeder der beiden elektrischen Leiter 11, 12 weist eine Isolationsschicht 17 auf. Ferner weist jeder der beiden elektrischen Leiter 11, 12 mehrere in der jeweiligen Isolationsschicht verlaufende Leiteradern 18 auf. Im Bereich jedes elektrischen Leiters 11, 12 sind die jeweiligen Leiteradern 18 vorzugsweise zu jeweils einem Leiteraderstrang 19 bzw. einem Leiteraderbündel verdrillt.

Jeder elektrische Leiter 11, 12 verfügt weiterhin über jeweils einen ersten Kühlmittelkanal 20, der von den jeweiligen Leiteradern 18 des Leiteraderstrangs 19 des jeweiligen elektrischen Leiters 11, 12 umschlossen ist und der der Kühlung der jeweiligen Leiteradern 18 bzw. des Leiteraderstrangs 19 des jeweiligen elektrischen Leiters 11, 12 von innen dient.

Zusätzlich zu diesem ersten, inneren Kühlmittelkanal 20 verfügt jeder elektrische Leiter 11, 12 über einen zweiten Kühlmittelkanal 21, welcher die jeweiligen Leiteradern 18 des Leiteraderstrangs 19 des jeweiligen elektrischen Leiters 11, 12 umschließt und welcher der Kühlung der Leiteradern 18 bzw. des Leiteraderstrangs 19 des jeweiligen elektrischen Leiters 11, 12 von außen dient.

Beim erfindungsgemäßen Kraftfahrzeugladekabel 10 ist demnach der Leiteraderstrang 19 jedes elektrischen Leiters 11, 12 für die Gleichspannungsphasen sowohl von innen als auch von außen gekühlt, und zwar von innen über den jeweiligen ersten Kühlmittelkanal 20, um den sich die jeweiligen Leiteradern 18 des jeweiligen Leiteraderstrangs 19 herum erstrecken, sowie über den jeweiligen zweiten Kühlmittelkanal 21, der sich um die jeweiligen Leiteradern 18 des jeweiligen Leiteraderstrangs 19 herum erstreckt.

Der jeweilige erste Kühlmittelkanal 20 ist dabei in einer ersten Richtung und der jeweilige zweite Kühlmittelkanal 21 in einer entgegengesetzten zweiten Richtung vom Kühlmittel durchströmbar. Der erste Kühlmittelkanal 20 und der zweite Kühlmittelkanal 21 des jeweiligen elektrischen Leiters 11, 12 definieren demnach einen leiterindividuellen Kühlkreislauf des jeweiligen elektrischen Leiters 11, 12.

Einer der Kühlmittelkanäle 20, 21 definiert einen Kühlmittelvorlauf und der andere der Kühlmittelkanäle 20, 21 definiert einen Kühlmittelrücklauf.

Im bevorzugten Ausführungsbeispiel definiert der erste, inneren Kühlmittelkanal 20 des jeweiligen elektrischen Leiters 11, 12 einen Kühlmittelvorlauf und der zweite, äußere Kühlmittelkanal 21 des jeweiligen elektrischen Leiters 11, 12 einen Kühlmittelrücklauf des jeweiligen leiterindividuellen Kühlkreislaufs.

Vorzugsweise sind zwischen den Leiteradern 18 des jeweiligen Leiteraderstrangs 19 des jeweiligen elektrischen Leiters 11, 12 und der Isolationsschicht 17 des jeweiligen elektrischen Leiters 11, 12 röhrenartige Abstandhalter 22 positioniert. Diese röhrenartigen Abstandhalter 22 unterteilen dabei den jeweiligen zweiten Kühlmittelkanal 21, wobei die röhrenartigen Abstandhalter 22 in einer bevorzugten Ausführungsform nicht nur vom Kühlmedium umströmt sondern darüber hinaus auch vom Kühlmedium durchströmt sind.

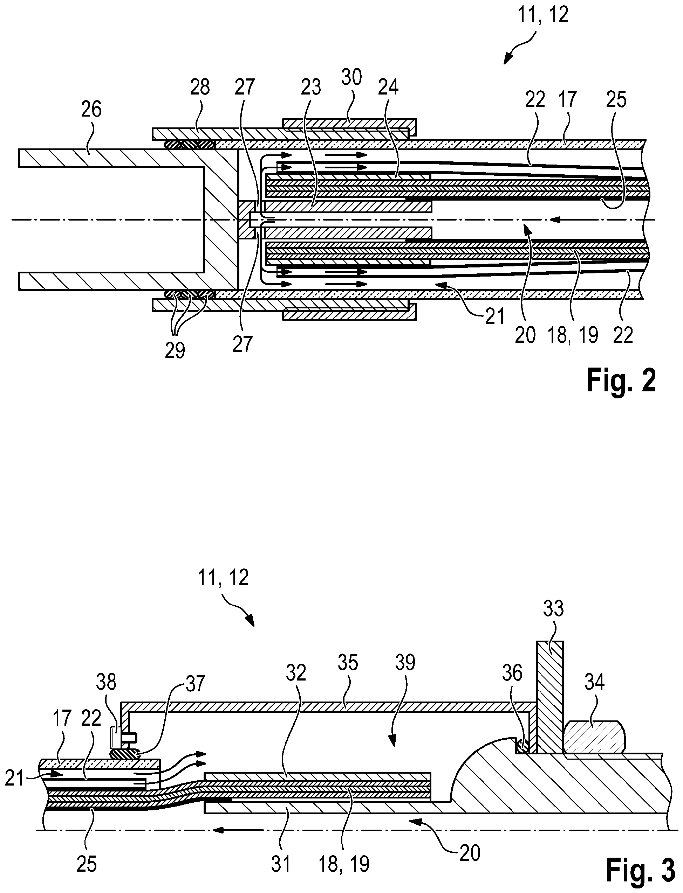

Fig. 2 zeigt einen Querschnitt durch einen der elektrischen Leiter 11, 12 im Bereich eines kraftfahrzeugseitigen Endes des Kraftfahrzeugladekabels 10 und damit des jeweiligen elektrischen Leiters 11, 12. Fig. 2 kann entnommen werden, dass im Bereich des kraftfahrzeugseitigen Endes des Kraftfahrzeugladekabels die Leiteradern 18 des jeweiligen elektrischen Leiters 11, 12 auf einen Crimpkontakt 23 über eine Crimphülse 24 aufgecrimpt sind, wobei der Crimpkontakt 23 den jeweiligen ersten Kühlmittelkanal 20 abschnittsweise definiert, und zwar im Bereich des kraftfahrzeugseitigen Endes des Kraftfahrzeugladekabels 10 bzw. des jeweiligen elektrischen Leiters 11, 12 desselben.

Hierdurch wird ein guter elektrischer Kontakt zwischen den Leiteradern 18 und dem elektrisch leitfähigen Crimpkontakt 23 ausgebildet. Im Bereich des kraftfahrzeugseitigen Endes des Kraftfahrzeugladekabels ist demnach der Crimpkontakt 23 radial innerhalb des Leiteraderstrangs 19 aus Leiteradern 18 und Crimphülse 24 radial außerhalb des Leiteraderstrangs 19 angeordnet.

Fig. 2 kann entnommen werden, dass im gezeigten Ausführungsbeispiel mit dem Crimpkontakt 23 ein Schlauch 25 verbunden ist, der sich ebenso wie der Crimpkontakt 18 innerhalb des Leiteraderstrangs 19 aus Leiteradern 18 erstreckt und zusammen mit dem Crimpkontakt 23 den ersten, inneren Kühlmittelkanal 20 definiert. Auf diesen Schlauch 25 kann auch verzichtet werden.

Der Crimpkontakt 23, mit dem die Leiteradern 18 des jeweiligen elektrischen Leiters 11, 12 kontaktiert sind, ist im Bereich des jeweiligen elektrischen Leiters 11, 12 mit einem Steckkontakt 26 elektrisch leitend verbunden. Zwischen dem Crimpkontakt 23 und dem Steckkontakt 26 ist eine stufenartige Durchmessererweiterung ausgebildet.

Gemäß Fig. 2 weist im Bereich des kraftfahrzeugseitigen Endes des Kraftfahrzeugladekabels 10 bzw. im Bereich des kraftfahrzeugseitigen Endes des jeweiligen elektrischen Leiters 11, 12 des Kraftfahrzeugladekabels 10 der jeweilige Crimpkontakt 23 des jeweiligen elektrischen Leiters 11, 12 benachbart zum Steckkontakt 26 Ausnehmungen 27 für den Übertritt des Kühlmittels vom jeweiligen ersten Kühlmittelkanal 20 in den jeweiligen zweiten Kühlmittelkanal 21 auf.

Diese Ausnehmungen 27 sind unmittelbar benachbart zur Durchmesservergrößerung zwischen Crimpkontakt 23 und Steckkontakt 26 ausgebildet, sodass der Steckkontakt 26 über das Kühlmittel, welches durch die Ausnehmungen 27 strömt, von hinten gekühlt werden kann. Hierdurch kann auch der jeweilige Steckkontakt 26 des jeweiligen elektrischen Leiters 11, 12 effektiv über das Kühlmittel gekühlt werden.

Im Anschluss strömt das Kühlmittel über den zweiten, äußeren Kühlmittelkanal 21 zurück in Richtung auf das gegenüberliegende, ladesäulenseitige Ende des Kraftfahrzeugladekabels 10 bzw. das gegenüberliegende, ladesäulenseitige Ende des jeweiligen elektrischen Leiters 11, 12.

Fig. 2 kann weiterhin entnommen werden, dass im Bereich des kraftfahrzeugseitigen Endes des Kraftfahrzeugladekabels 10 die Isolierung 17 des jeweiligen elektrischen Leiters 11, 12 am Steckkontakt 26 über eine Verbindungshülse 28 gehalten ist, wobei zwischen Verbindungshülse 28 und Steckkontakt 26 ein Dichtelement 29 positioniert ist. Über eine Druckschraube 30 wird eine entsprechende Kraft auf die Verbindungshülse 28 aufgebracht, um den Verbindungsbereich zwischen Verbindungshülse 28, Steckerkontakt 26 und Isolierung 17 sicher abzudichten.

Fig. 3 zeigt einen Ausschnitt aus einem Kraftfahrzeugladekabel 10 im Bereich eines ladesäulenseitigen Endes desselben, und zwar im Bereich eines elektrischen Leiters 11 bzw. 12 des Kraftfahrzeugladekabels 10. Auch im Bereich des ladesäulenseitigen Endes des Kraftfahrzeugladekabels sind die Leiteradern 18 des jeweiligen elektrischen Leiters 11, 12 auf einen Crimpkontakt 31 mithilfe einer Crimphülse 32 aufgecrimpt.

Auch im Bereich des ladesäulenseitigen Endes definiert der Crimpkontakt 31 den ersten, inneren Kühlmittelkanal 20 abschnittsweise. Die Leiteradern 18 des Leiteraderstrangs 19 sind demnach mit dem Crimpkontakt 31 elektrisch kontaktiert, wobei ein gegenüber den Leiteradern 18 vorstehender Abschnitt des Crimpkontakts 31 innerhalb einer im Detail nicht gezeigten Ladesäule mit einer Stromschiene 33 der Ladesäule elektrisch kontaktiert ist, wobei diese elektrische Verbindung zwischen der Stromschiene 33 der Ladesäule und dem am ladesäulenseitigen Ende vorhandenen Crimpkontakt 31 über eine Mutter 34 gesichert ist, die auf den gegenüber den Leiteradern 18 vorstehenden Abschnitt des Crimpkontakts 31 aufgeschraubt ist.

Ausgehend von der Ladesäule kann das Kühlmittel dem jeweiligen elektrischen Leiter 11, 12 zugeführt werden, und zwar dem ersten, inneren Kühlmittelkanal 20, der über den Crimpkontakt 31 mit Kühlmittel versorgt wird, wobei der Crimpkontakt 31 im Bereich der Ladesäule den ersten, inneren Kühlmittelkanal 20 des jeweiligen elektrischen Leiters 11, 12 des Kraftfahrzeugladekabels 10 abschnittsweise definiert.

Im Bereich des in Fig. 3 gezeigten ladesäulenseitigen Endes des Kraftfahrzeugladekabels 10 kann nicht nur der erste Kühlmittelkanal 20 des jeweiligen elektrischen Leiters 11, 12 des Kraftfahrzeugladekabels 10 mit Kühlmittel versorgt werden, vielmehr kann im Bereich dieses ladesäulenseitigen Endes auch Kühlmittel aus dem zweiten Kühlmittelkanal 21 des jeweiligen elektrischen Leiters 11, 12 in die Ladesäule abgeführt werden, und zwar vorzugsweise gemäß Fig. 3 in einen von einem Gehäuse 35 definierten Aufnahmeraum 39, in den das Kühlmittel, ausgehend vom zweiten Kühlmittelkanal 21 des jeweiligen elektrischen Leiters 11, 12 einströmt.

Dieses Gehäuse 35 ist dabei einerseits über eine Dichtung 36 gegenüber dem Crimpkontakt 31 und andererseits über eine Dichtung 37 gegenüber der Isolierung 17 des jeweiligen elektrischen Leiters 11, 12 abgedichtet. Die Dichtung 36 ist über die Mutter 34 zwischen Stromschiene 33 und Crimp-Kontakt 31 unter Zwischenanordnung eines Abschnitts des Gehäuses 35 fixiert bzw. geklemmt.

Im Bereich der Dichtung 37 bringt eine Druckschraube 38 eine Kraft auf, um einen entsprechenden Abschnitt des Gehäuses 35 gegenüber der Isolierung 17 des jeweiligen elektrischen Leiters 11, 12 abzudichten. Die Druckschraube 38 ist vorzugsweise als Doppeldruckschraube ausgeführt.

Beim erfindungsgemäßen Kraftfahrzeugladekabel 10 für das Gleichspannungsladen eines elektrischen Energiespeichers eines Kraftfahrzeugs sind demnach die beiden elektrischen Leiter 11, 12 für die beiden Gleichspannungsphasen individuell gekühlt, und zwar sowohl von innen als auch von außen, nämlich von innen über den ersten Kühlmittelkanal 20, der sich innerhalb des jeweiligen Leiteraderstrangs 19 erstreckt, sowie über den zweiten Kühlmittelkanal 21, der sich außerhalb des jeweiligen Leiteraderstrangs 19 erstreckt.

Am kraftfahrzeugseitigen Ende des Kraftfahrzeugladekabels 10 können auch Steckkontakte 26 der jeweiligen elektrischen Leiter 11, 12 effektiv gekühlt werden, und zwar über Kühlmittel, welches unmittelbar benachbart zum Steckkontakt vom ersten, inneren Kühlmittelkanal 20 in den zweiten, äußeren Kühlmittelkanal 21 überströmt und so den Steckkontakt 26 von hinten kühlt.

Diese Strömungsführung wird über den jeweiligen Crimpkontakt 23 im Bereich des kraftfahrzeugseitigen Endes des jeweiligen elektrischen Leiters 11, 12 des Kraftfahrzeugladekabels 10 bereitgestellt, der hohl ausgeführt ist und die Ausnehmungen 27 zur Überströmung des Kühlmittels vom ersten Kühlmittelkanal 20 in den zweiten Kühlmittelkanal 21 aufweist.

Am gegenüberliegenden ladesäulenseitigen Ende des Kraftfahrzeugladekabels 10 kann Kühlmittel in den ersten, inneren Kühlmittelkanal 20 des jeweiligen elektrischen Leiters 11, 12 eingeführt sowie Kühlmittel aus dem zweiten Kühlmittelkanal 21 des jeweiligen elektrischen Leiters 11, 12 abgeführt werden.

Mit dem erfindungsgemäßen Kraftfahrzeugladekabel 10 kann Gleichspannungsladen mit hohen Gleichspannungen und Gleichströmen zum Schnellladen eines elektrischen Energiespeichers eines Elektrofahrzeugs erfolgen.

## Patentansprüche

1. Kraftfahrzeugladekabel (10) für ein Gleichspannungsladen eines elektrischen Energiespeichers eines Kraftfahrzeugs,
mit einem ersten elektrischen Leiter (11) für eine erste Gleichspannungsphase,
mit einem zweiten elektrischen Leiter (12) für eine zweite Gleichspannungsphase,
wobei der erste elektrische Leiter (11) und zweite elektrische Leiter (12) jeweils eine Isolationsschicht (17) und in der jeweiligen Isolationsschicht (17) verlaufende, einen Leiteraderstrang (19) bildende Leiteradern (18) aufweisen,
wobei der erste und zweite elektrische Leiter (11, 12) jeweils einen ersten Kühlmittelkanal (20) zur Kühlung des jeweiligen Leiteraderstrangs (19) von innen aufweisen, der von den jeweiligen Leiteradern (18) umschlossen ist,
wobei der erste und zweite elektrische Leiter (11, 12) ferner jeweils einen zweiten Kühlmittelkanal (21) zur Kühlung des jeweiligen Leiteraderstrangs (19) von außen aufweisen, der die jeweiligen Leiteradern (18) umschließt,
wobei im Bereich eines kraftfahrzeugseitigen Endes des Kraftfahrzeugladekabels die Leiteradern (18) des Leiteraderstrangs (19) des jeweiligen elektrischen Leiters (11, 12) jeweils auf einen den jeweiligen ersten Kühlmittelkanal (20) abschnittsweise definierenden Crimpkontakt (23) über eine Crimphülse (24) aufgecrimpt sind,
**dadurch gekennzeichnet, dass**
im Bereich des kraftfahrzeugseitigen Endes des Kraftfahrzeugladekabels der Crimpkontakt (23) im Bereich des jeweiligen elektrischen Leiters (11, 12) mit einem Steckkontakt (26) elektrisch leitend verbunden ist, wobei zwischen dem Crimpkontakt (23) und dem Steckkontakt (26) eine stufenartige Durchmessererweiterung ausgebildet ist,
im Bereich des kraftfahrzeugseitigen Endes des Kraftfahrzeugladekabels der Crimpkontakt (23) des jeweiligen elektrischen Leiters (11, 12) benachbart zu einem Steckkontakt (26) des jeweiligen elektrischen Leiters (11, 12) Ausnehmungen (27) für den Übertritt des Kühlmittels vom jeweiligen ersten Kühlmittelkanal (20) in den jeweiligen zweiten Kühlmittelkanal (21) aufweist, wobei die Ausnehmungen (27) unmittelbar benachbart zur Durchmesservergrößerung zwischen Crimpkontakt (23) und Steckkontakt (26) ausgebildet sind, sodass der Steckkontakt (26) über das Kühlmittel, welches durch die Ausnehmungen (27) strömt, von hinten kühlbar ist.

2. Kraftfahrzeugladekabel nach Anspruch 1, **dadurch gekennzeichnet, dass** der erste Kühlmittelkanal (20) des jeweiligen elektrischen Leiters (11, 12) in einer ersten Richtung und der zweite Kühlmittelkanal (21) des jeweiligen elektrischen Leiters (11, 12) in einer entgegengesetzten zweiten Richtung vom Kühlmittel durchströmbar ist, wobei der erste und der zweite Kühlmittelkanal (20, 21) des jeweiligen elektrischen Leiters (11, 12) einen leiterindividuellen Kühlkreislauf des jeweiligen elektrischen Leiters (11, 12) definieren.

3. Kraftfahrzeugladekabel nach Anspruch 2, **dadurch gekennzeichnet, dass** der erste Kühlmittelkanal (20) einen Kühlmittelvorlauf und der zweite Kühlmittelkanal (21) einen Kühlmittelrücklauf des jeweiligen leiterindividuellen Kühlkreislaufs definieren.

4. Kraftfahrzeugladekabel nach Anspruch 2, **dadurch gekennzeichnet, dass** der erste Kühlmittelkanal (20) einen Kühlmittelrücklauf und der zweite Kühlmittelkanal (21) einen Kühlmittelvorlauf des jeweiligen leiterindividuellen Kühlkreislaufs definieren.

5. Kraftfahrzeugladekabel nach einem der Ansprüche 1 bis 4, **dadurch gekennzeichnet, dass** zwischen den Leiteradern (18) des Leiteraderstrangs (19) des jeweiligen elektrischen Leiters (11, 12) und der Isolationsschicht (17) des jeweiligen elektrischen Leiters (11, 12) röhrenartige Abstandhalter, (22)positioniert sind, die den jeweiligen zweiten Kühlmittelkanal (21) unterteilen.

6. Kraftfahrzeugladekabel nach Anspruch 5, **dadurch kennzeichnet, dass** die röhrenartigen Abstandhalter (22) von Kühlmedium umströmt und durchströmt sind.

7. Kraftfahrzeugladekabel nach einem der Ansprüche 1 bis 6, **dadurch gekennzeichnet, dass** eines ladesäulenseitigen Endes des Kraftfahrzeugladekabels die Leiteradern (18) des Leiteraderstrangs (19) des jeweiligen elektrischen Leiters (11, 12) auf einen den jeweiligen ersten Kühlmittelkanal (20) abschnittsweise definierenden Crimpkontakt (31) über eine Crimphülse (32) aufgecrimpt sind.

8. Kraftfahrzeugladekabel nach Anspruch 7, **dadurch gekennzeichnet, dass** im Bereich des ladesäulenseitigen Endes des Kraftfahrzeugladekabels dem ersten Kühlmittelkanal (20) des jeweiligen elektrischen Leiters (11, 12) Kühlmittel über den Crimpkontakt (31) ausgehend von einer Ladesäule zuführbar ist.

9. Kraftfahrzeugladekabel nach Anspruch 7 oder 8, **dadurch gekennzeichnet, dass** im Bereich des ladesäulenseitigen Endes des Kraftfahrzeugladekabels aus dem zweitem Kühlmittelkanal (21) des jeweiligen elektrischen Leiters (11, 12) Kühlmittel in die Ladesäule abführbar ist.

## Claims

1. Motor vehicle charging cable (10) for DC voltage charging an electrical energy store of a motor vehicle,
comprising a first electrical conductor (11) for a first DC voltage phase,
comprising a second electrical conductor (12) for a second DC voltage phase,
wherein the first electrical conductor (11) and the second electrical conductor (12) each have an insulation layer (17) and conductor cores (18) which run in the respective insulation layer (17) and form a conductor core strand (19),
wherein the first and the second electrical conductor (11, 12) each have a first coolant duct (20) for cooling the respective conductor core strand (19) from the inside, which first coolant duct is surrounded by the respective conductor cores (18),
wherein the first and the second electrical conductor (11, 12) each further have a second coolant duct (21) for cooling the respective conductor core strand (19) from the outside, which second coolant duct surrounds the respective conductor cores (18),
wherein, in the region of a motor vehicle-side end of the motor vehicle charging cable, the conductor cores (18) of the conductor core strand (19) of the respective electrical conductor (11, 12) are each crimped by means of a crimping sleeve (24) onto a crimping contact (23) which defines the respective first coolant duct (20) in sections,
**characterized in that**,
in the region of the motor vehicle-side end of the motor vehicle charging cable, the crimping contact (23) is electrically conductively connected to a plug-in contact (26) in the region of the respective electrical conductor (11, 12), wherein a step-like portion of widened diameter is formed between the crimping contact (23) and the plug-in contact (26),
in the region of the motor vehicle-side end of the motor vehicle charging cable, the crimping contact (23) of the respective electrical conductor (11, 12), adjacent to a plug-in contact (26) of the respective electrical conductor (11, 12), has recesses (27) for transferring the coolant from the respective first coolant duct (20) to the respective second coolant duct (21), wherein the recesses (27) are formed directly adjacent to the portion of enlarged diameter between the crimping contact (23) and the plug-in contact (26), so that the plug-in contact (26) can be cooled by means of the coolant, which flows through the recesses (27), from the rear.

2. Motor vehicle charging cable according to Claim 1, **characterized in that** the coolant can flow through the first coolant duct (20) of the respective electrical conductor (11, 12) in a first direction and through the second coolant duct (21) of the respective electrical conductor (11, 12) in an opposite second direction, wherein the first and the second coolant duct (20, 21) of the respective electrical conductor (11, 12) define a conductor-specific cooling circuit of the respective electrical conductor (11, 12).

3. Motor vehicle charging cable according to Claim 2, **characterized in that** the first coolant duct (20) defines a coolant feed line and the second coolant duct (21) defines a coolant return line of the respective conductor-specific cooling circuit.

4. Motor vehicle charging cable according to Claim 2, **characterized in that** the first coolant duct (20) defines a coolant return line and the second coolant duct (21) defines a coolant feed line of the respective conductor-specific cooling circuit.

5. Motor vehicle charging cable according to one of Claims 1 to 4, **characterized in that** pipe-like spacers (22), which subdivide the respective second coolant duct (21), are positioned between the conductor cores (18) of the conductor core strand (19) of the respective electrical conductor (11, 12) and the insulation layer (17) of the respective electrical conductor (11, 12).

6. Motor vehicle charging cable according to Claim 5, **characterized in that** cooling medium flows around and through the pipe-like spacers (22).

7. Motor vehicle charging cable according to one of Claims 1 to 6, **characterized in that**, of a charging column-side end of the motor vehicle charging cable, the conductor cores (18) of the conductor core strand (19) of the respective electrical conductor (11, 12) are each crimped by means of a crimping sleeve (32) onto a crimping contact (31) which defines the respective first coolant duct (20) in sections.

8. Motor vehicle charging cable according to Claim 7, **characterized in that**, in the region of the charging column-side end of the motor vehicle charging cable, coolant can be supplied starting from a charging column, by means of the crimping contact (31), to the first coolant duct (20) of the respective electrical conductor (11, 12).

9. Motor vehicle charging cable according to Claim 7 or 8, **characterized in that**, in the region of the charging column-side end of the motor vehicle charging cable, coolant can be discharged to the charging column from the second coolant duct (21) of the respective electrical conductor (11, 12).

## Revendications

1. Câble de charge de véhicule automobile (10) destiné à la charge à tension continue d'un accumulateur d'énergie électrique d'un véhicule automobile, ledit câble comprenant
un premier conducteur électrique (11) destiné à une première phase de tension continue,
un deuxième conducteur électrique (12) destiné à une deuxième phase de tension continue,
le premier conducteur électrique (11) et le deuxième conducteur électrique (12) comportant chacun une couche isolante (17) et des brins de conducteur (18) qui s'étendent dans la couche isolante respective (17) et qui forment un toron de brins de conducteur (19),
les premier et deuxième conducteurs électriques (11, 12) comportant chacun un premier conduit d'agent de refroidissement (20) qui est destiné à refroidir le toron de brins de conducteur respectif (19) depuis l'intérieur et qui est entouré par les brins de conducteur respectifs (18),
les premier et deuxième conducteurs électriques (11, 12) comportant chacun un deuxième conduit d'agent de refroidissement (21) qui est destiné à refroidir le toron de brins de conducteur respectif (19) depuis l'extérieur et qui entoure les brins de conducteur respectifs (18),
les brins de conducteur (18) du toron de brins de conducteur (19) du conducteur électrique respectif (11, 12) étant chacun sertis sur un contact à sertir (23), définissant par portions le premier conduit d'agent de refroidissement respectif (20), par le biais d'un manchon à sertir (24) dans la région d'une extrémité côté véhicule du câble de charge de véhicule automobile,
**caractérisé en ce que**
dans la région de l'extrémité côté véhicule du câble de charge de véhicule automobile, le contact à sertir (23) est relié électriquement à un contact enfichable (26) dans la région du conducteur électrique respectif (11, 12), un agrandissement du diamètre en gradins étant formé entre le contact à sertir (23) et le contact enfichable (26),
dans la zone de l'extrémité côté véhicule du câble de charge de véhicule automobile, le contact à sertir (23) du conducteur électrique respectif (11, 12) comporte, de manière adjacente à un contact enfichable (26) du conducteur électrique respectif (11, 12), des évidements (27) destinés au passage de l'agent de refroidissement du premier conduit d'agent de refroidissement respectif (20) jusque dans le deuxième conduit d'agent de refroidissement respectif (21), les évidements (27) étant conçus pour être immédiatement adjacents à l'agrandissement de diamètre situé entre le contact à sertir (23) et le contact enfichable (26) de sorte que le contact enfichable (26) puisse être refroidi depuis l'arrière par l'agent de refroidissement qui s'écoule à travers les évidements (27) .

2. Câble de charge de véhicule automobile selon la revendication 1, **caractérisé en ce que** l'agent de refroidissement peut s'écouler dans le premier conduit d'agent de refroidissement (20) du conducteur électrique respectif (11, 12) dans un premier sens et dans le deuxième conduit d'agent de refroidissement (21) du conducteur électrique respectif (11, 12) dans un deuxième sens opposé, le premier et le deuxième conduit d'agent de refroidissement (20, 21) du conducteur électrique respectif (11, 12) définissant un circuit de refroidissement spécifique au conducteur électrique respectif (11, 12).

3. Câble de charge de véhicule automobile selon la revendication 2, **caractérisé en ce que** le premier conduit de liquide de refroidissement (20) définit une voie montante d'agent de refroidissement et le deuxième conduit d'agent de refroidissement (21) définit une voie de retour d'agent de refroidissement du circuit de refroidissement respectif spécifique au conducteur.

4. Câble de charge de véhicule automobile selon la revendication 2, **caractérisé en ce que** le premier conduit d'agent de refroidissement (20) définit une voie de retour d'agent de refroidissement et le deuxième conduit d'agent de refroidissement (21) définit une voie montante d'agent de refroidissement du circuit de refroidissement respectif spécifique au conducteur.

5. Câble de charge de véhicule automobile selon l'une des revendications 1 à 4, **caractérisé en ce que** des éléments d'espacement tubulaires (22), qui divisent le deuxième conduit de refroidissement respectif (21), sont positionnés entre les brins de conducteur (18) du toron de brins de conducteur (19) du conducteur électrique respectif (11, 12) et la couche isolante (17) du conducteur électrique respectif (11, 12).

6. Câble de charge de véhicule automobile selon la revendication 5, **caractérisé en ce que** l'agent de refroidissement s'écoule autour des éléments d'espacement tubulaires (22) et à travers ceux-ci.

7. Câble de charge de véhicule automobile selon l'une des revendications 1 à 6, **caractérisé en ce que**, d'une extrémité côté colonne de charge du câble de charge de véhicule automobile, les brins de conducteur (18) du toron de brins de conducteur (19) du conducteur électrique respectif (11, 12) sont sertis sur un contact à sertir (31), définissant par portions un premier conduit d'agent de refroidissement respectif (20), par le biais d'un manchon à sertir (32).

8. Câble de charge de véhicule automobile selon la revendication 7, **caractérisé en ce que**, dans la région de l'extrémité côté colonne de charge du câble de charge de véhicule automobile, l'agent de refroidissement peut être acheminé d'une colonne de charge au premier conduit d'agent de refroidissement (20) du conducteur électrique respectif (11, 12) par le biais du contact à sertir (31).

9. Câble de charge de véhicule automobile selon la revendication 7 ou 8, **caractérisé en ce que**, dans la région de l'extrémité côté colonne de charge du câble de charge de véhicule automobile, l'agent de refroidissement peut être évacué du deuxième conduit d'agent de refroidissement (21) du conducteur électrique respectif (11, 12) dans la colonne de charge.
